# EUROPÄISCHE PATENTSCHRIFT

(11) **EP 0 881 110 B1**
(45) Veröffentlichungstag und Bekanntmachung des Hinweises auf die Patenterteilung: **06.08.2003**
(21) Anmeldenummer: 98102986.1
(22) Anmeldetag: 20.02.1998
(51) Int. Cl.: B60J 3/02

(54) **Sonnenblende für Fahrzeuge**
Sun visor for vehicles
Pare-soleil pour véhicules

(30) Priorität: 28.05.1997 DE 19722259
(43) Veröffentlichungstag der Anmeldung: 02.12.1998
(73) Patentinhaber: Johnson Controls Interiors GmbH & Co. KG, 42285 Wuppertal (DE)
(72) Erfinder: Bodar, André, 57690 Bambiederstroff (FR); Agro, Marc, 57500 Saint-Avold (FR)
(74) Vertreter: Hemmelmann, Klaus

(56) Entgegenhaltungen:
- EP-A- 0 231 440
- DE-A- 2 811 429
- DE-A- 3 402 416
- DE-C- 4 104 032

## Beschreibung

Die Erfindung bezieht sich auf eine Sonnenblende für Fahrzeuge, der im Oberbegriff des Anspruchs 1 angegebenen Art.

Eine gattungsgemäße Sonnenblende ist in der DE 41 04 032 C1 beschrieben. Die bekannte Sonnenblende hat sich im praktischen Gebrauch als noch verbesserungsbedürftig erwiesen. Dabei ist die Überwindung besonderer Schwierigkeiten in der Einhaltung der geforderten Spezifikation hinsichtlich Radialspiel und Schiebekraft zwischen Hohlkörper und Gleitkörper hervorzuheben. Es versteht sich, daß es bei einem zu großen toleranzbedingten Radialspiel leicht zu einem unerwünschten Verstellen des Sonnenblendenkörpers kommen kann. Versuche zur Kleinhaltung des Radialspiels haben gezeigt, daß selbst bei Toleranzeinhaltung die Schiebekräfte nicht zuverlässig beherrschbar waren. Entweder waren oftmals die Schiebekräfte gegenüber den Kundenforderungen zu hoch (bei Raumtemperatur) oder zu niedrig (nach Wärmelagerung). Dieser Umstand ist wohl auf die unterschiedlichen Ausdehnungskoeffizienten zwischen dem aus Metall bestehenden rohrförmigen Hohlkörper und dem aus Kunststoff bestehenden Gleitkörper zurückzuführen.

Der Erfindung liegt nun die Aufgabe zugrunde, eine Sonnenblende der eingangs genannten Art zu schaffen, die die von den Abnehmern geforderte Spezifikation hinsichtlich Radialspiel und Schiebekraft zwischen Hohlkörper und Gleitkörper bei Wärme und Kälte zu erfüllen vermag.

Gelöst wird diese Aufgabe erfindungsgemäß dadurch, daß der Gleitkörper aus einem modifizierten mit Molybdän angereicherten POM (Polyoxymethylen) gebildet ist und eine bodenseitig offene Ausnehmung aufweist, in die eine Druckfeder und ein von dieser beaufschlagter Bremsbacken eingesetzt ist.

Es hat sich gezeigt, daß das erfindungsgemäß für den Gleitkörper eingesetzte Material hervorragende Gleiteigenschaften aufweist, was bei zu geringem Radialspiel wichtig ist und daß der erfindungsgemäß vorgesehene federbelastete Bremsbacken sicherstellt, daß die geforderte Schiebekraft nicht unter Soll (Soll 5 bis 15 N) absinkt. Damit läßt sich eine gewollte Längsverschiebung des Sonnenblendenkörpers mühelos bewerkstelligen während eine ungewollte Längsverschiebung, wie sie früher bei Fahrzeugerschütterungen oder Fliehkrafteinwirkungen eintreten konnte, verhindert wird.

Für die Herstellung des Gleitkörpers und Erzielung guter Gleiteigenschaften desselben hat es sich vorteilhaft erwiesen, daß Molybdän POM C 9021 M verwendet wird.

Der Bremsbacken weist bevorzugterweise eine E-förmige Ausbildung auf mit einem von der Druckfeder übergriffenen mittigen Schenkel. Für die Druckfeder, bei der es sich bevorzugt um eine Schraubendruckfeder handelt ergibt sich damit eine zentrierte Aufnahme und Abstützung.

Gemäß einer Ausgestaltung der Erfindung kann der Bremsbacken als Kunststoff-Spritzgußteil ausgebildet sein und aus POM C 9021 K bestehen.

Eine weitere Ausgestaltung der Erfindung sieht vor, daß das Funktionsspiel zwischen dem Gleitkörper und dem rohrförmigen Hohlkörper kleiner als 0,05 mm ist.

Ein erfindungsgemäßes Verfahren zum Herstellen einer Sonnenblende der vorstehend beschriebenen Art ist gekennzeichnet durch die Schritte:
- Herstellen (Spritzgießen) des Gleitkörpers mit Übermaß gegenüber dem Hohlkörper,
- Bestücken des Gleitkörpers mit komplettiertem Metallkäfig, Bremsbacken und Druckfeder,
- Einpressen des bestückten Gleitkörpers in den Hohlkörper,
- Erwärmen dieser Einheit auf etwa 90°C über ca. zwei Stunden,
- Abkühlen dieser Einheit auf Raumtemperatur.

Das Übermaß des Gleitkörpers, der auf 5/100 mm genau gespritzt werden kann, bezieht sich auf die über den Umfang verteilten, die Abstützung des Gleitkörpers im Hohlkörper bewirkenden äußeren Andruckelemente und ist so bemessen, daß in allen Fällen mit Toleranzschwankungen des Hohlkörpers (man muß 1,5/10 mm rechnen) der Gleitkörper mit Pressung in den Hohlkörper eingedrückt wird. Durch das Erwärmen der montierten Einheit und das Wiederabkühlen derselben, erreicht man in den Führungsflächenbereichen eine exakte Anpassung. Dies ist darauf zurückzuführen, daß der metallische Hohlkörper viel schneller abkühlt als der darin befindliche Gleitkörper aus Kunststoffmaterial und daß durch die Schrumpf- und Dehnungseigenschaften des Hohlkörperwerkstoffes (Aluminium) der Gleitkörper in den Bereichen der Führungsflächen auf den Hohlkörper genauestens angepaßt wird. Nach diesem Schrumpfverfahren Alu- und Kunststoffteil ist das Funktionsspiel zwischen diesen Teilen kleiner als 0,05 mm. Die gewünschte Schiebekraft wird dann nur durch den Bremsbacken und die Druckfeder erreicht und beträgt nun 7 bis 13 N. Durch die erfindungsgemäßen Maßnahmen lassen sich die geforderte Spezifikation Radialspiel und Schiebekraft bei Wärme und Kälte erreichen.

Ein Ausführungsbeispiel der Erfindung wird im folgenden anhand der Zeichnung näher erläutert. Es zeigen:
- Fig. 1: eine Gesamtansicht der Sonnenblende,
- Fig. 2: den im Hohlkörper angeordneten Gleitkörper der Sonnenblende nach Fig. 1,
- Fig. 3: einen Schnitt folgend der Linie III-III in Fig. 2 und
- Fig. 4: den durch einen Metallkäfig ergänzten Gleitkörper nach Fig. 2.

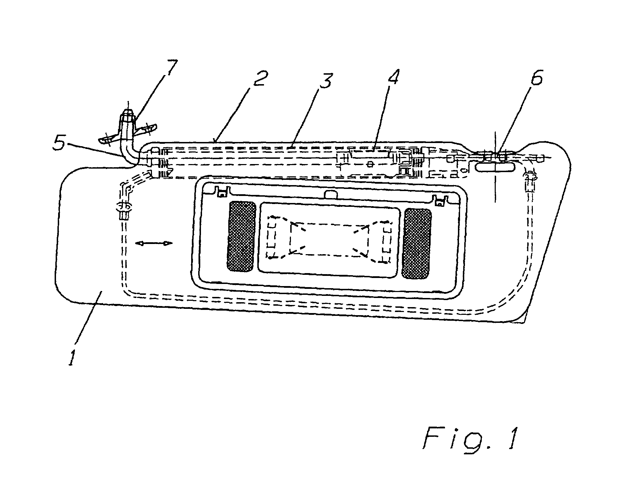

Die Sonnenblende nach Fig. 1 besteht aus einem Sonnenblendenkörper 1, der im Bereich seiner oberen Längskante 2 einen darin eingelagerten rohrförmigen Hohlkörper 3 trägt, in dem ein Gleitkörper 4 axial verschiebbar aufgenommen ist, welcher eine Achse 5 lagert. Die Sonnenblende weist weiterhin einen Lagerstift 6 zum Einrasten in ein nicht dargestelltes Gegenlager auf. Die Achse 5 besitzt eine etwa L-förmige Ausbildung, deren langer Schenkel vom Gleitkörper 4 und deren kurzer Schenkel von einem Schwenklagerböckchen 7 aufgenommen ist. Der Sonnenblendenkörper 1 ist üblicherweise auf dem langen Schenkel der Achse 5 in der aus Fig. 1 ersichtlichen Lage angeordnet. Damit sich Fahrer und Beifahrer eines Fahrzeuges vor einfallenden Sonnenstrahlen oder anderen Lichtquellen schützen können, ist der Sonnenblendenkörper 1 oberhalb der Windschutzscheibe an der Fahrzeugkarosserie befestigt und er kann vor die Windschutzscheibe geklappt oder zu einer Seitenscheibe geschwenkt werden. Darüber hinaus ist eine, durch den Doppelpfeil angedeutete verschiebbare Anordnung des Sonnenblendenkörpers 1 auf dem langen Schenkel der Achse vorgesehen, die besonders dann von Vorteil ist, wenn sich der Sonnenblendenkörper in einer vor einer vorderen Seitenscheibe eines Fahrzeuges geschwenkte Lage befindet.

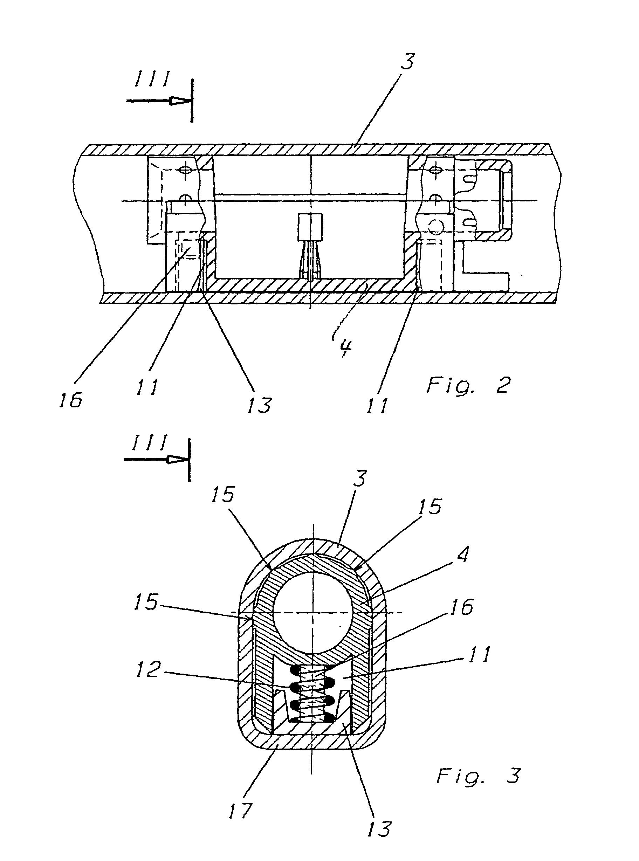

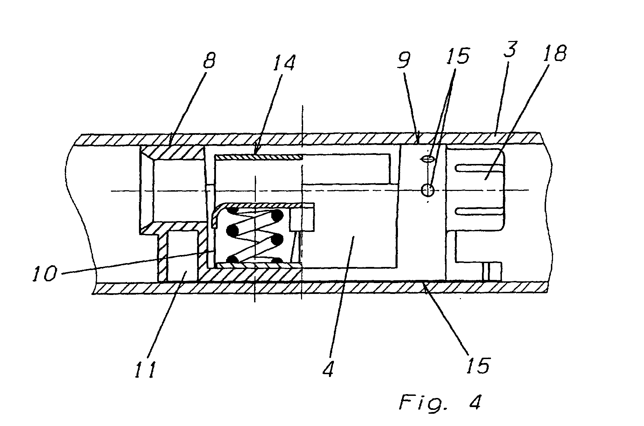

Der in den Fig. 2 bis 4 im gegenüber Fig. 1 vergrößerten Maßstab dargestellte Gleitkörper 4 besteht aus einem Kunststoff-Spritzgußteil, namentlich aus einem modifizierten mit Molybdän angereicherten POM und weist im Querschnitt (vgl. Fig. 3) die Form eines Rechtecks mit einer oberen abgerundeten Schmalseite auf. Dieser Querschnitt ist dem des rohrförmigen Hohlkörpers 3 angepaßt. Der Gleitkörper 4 ist mit über den Umfang verteilten Andruckelementen 15 in Form von Vorsprüngen materialeinheitlich ausgebildet. Die Andruckelemente 15 stützen sich an der Innenwandung des rohrförmigen Hohlkörpers 3 ab, so daß die Reibungsfläche zwischen dem rohrförmigen Hohlkörper 3 und dem Gleitkörper 4 auf die Andruckelemente 15 beschränkt ist. Der Gleitkörper 4 besitzt ein vorderes Lagerauge 8 und ein hinteres Lagerauge 9 für die Achse 5. An das hintere Lagerauge 9 des Gleitkörpers 4 schließt sich eine ringförmige Klipsraste 18 an, die dazu dient, die Achse 5 gegen ein axiales Verschieben gesichert am Gleitkörper 4 festzulegen. Zwischen den Lageraugen 8, 9 ist ein länglicher, von außen her zugänglicher Hohlraum 10 ausgespart. Der Hohlraum 10 dient zur Aufnahme eines Metallkäfigs 14, der in der DE 41 04 032 C1 im einzelnen beschrieben und daher hier nicht näher zu erläutern ist.

An den Endbereichen des Gleitkörpers 4 sind bodenseitig offene Ausnehmungen 11 vorgesehen. In einer dieser Ausnehmungen sind eine Druckfeder 12 und ein von dieser beaufschlagter, sich an der Fußwandung 17 des rohrförmigen Hohlkörpers 3 abstützender Bremsbacken 13 eingesetzt. Der Bremsbacken 13 besitzt eine E-förmige Ausbildung, dessen mittlerer Schenkel einen Endbereich der Schraubendruckfeder 12 aufnimmt. Das andere Ende der Schraubendruckfeder 12 stützt sich am Grund der Ausnehmung 11, an der zur besseren Führung der Schraubendruckfeder ein Zapfen 16 angeformt sein kann, ab. Der Bremsbacken 13 ist im übrigen dem Öffnungsquerschnitt der Ausnehmung 11 angepaßt mit einem eine Relativbewegung zulassenden Funktionsspiel.

## Patentansprüche

1. Sonnenblende für Fahrzeuge mit einem Sonnenblendenkörper (1), der um eine Achse (5) schwenkbar und auf dieser Achse (5) längsverschiebbar angeordnet ist, wobei die Achse (5) drehbeweglich, jedoch gegen ein axiales Verschieben gesichert, von einem als Kunststoff-Spritzgußteil ausgebildeten Gleitkörper (4) aufgenommen ist, der seinerseits drehfest, jedoch axial verschiebbar, in einem rohrförmigen, im Bereich einer Längskante des Sonnenblendenkörpers (1) eingebetteten Hohlkörper (3) gelagert ist, und wobei der Gleitkörper (4) mit einem inneren, radial gegen die Achse (5) wirkenden Andruckelement ausgerüstet ist und über den Umfang verteilte, die Abstützung des Gleitkörpers (4) im Hohlkörper (3) bewirkende äußere Andruckelemente (15) aufweist, und wobei der Gleitkörper (4) zwischen einem vorderen (8) und einem hinteren Lagerauge (9) für die Achse (5) einen länglichen, von außen her zugänglichen Hohlraum (10) aufweist, in dem ein länglicher, für die Aufnahme der Achse (5) bestimmter Metallkäfig (14) eingesetzt ist, der das gegen die Achse (5) wirkende Andruckelement trägt, wobei zwischen dem Boden des Metallkäfigs (14) und dem Andruckelement Federmittel angeordnet sind, um das Andruckelement gegen die Achse (5) und damit die Achse (5) gegen die entsprechend dem Radius der Achse (5) abgerundete Kopfwandung des Metallkäfigs (14) zu pressen, **dadurch gekennzeichnet, daß** der Gleitkörper (4) aus einem modifizierten mit Molybdän angereicherten Polyoxymethylen, POM, gebildet ist und eine bodenseitig offene Ausnehmung (11) aufweist, in die eine Druckfeder (12) und ein von dieser beaufschlagter, sich an der Fußwandung (17) des rohrförmigen Hohlkörpers (3) abstützender Bremsbacken (13) eingesetzt ist.

2. Sonnenblende nach Anspruch 1, **dadurch gekennzeichnet, daß** Molybdän POM C 9021 M verwendet wird.

3. Sonnenblende nach Anspruch 1 oder 2, **dadurch gekennzeichnet, daß** der Bremsbacken (13) eine E-förmige Ausbildung aufweist mit einem von der Druckfeder (12) übergriffenen mittigen Schenkel.

4. Sonnenblende nach mindestens einem der Ansprüche 1 bis 3, **dadurch gekennzeichnet, daß** der Bremsbacken (13) als Kunststoff-Spritzgußteil ausgebildet ist und aus POM 9021 K besteht.

5. Sonnenblende nach mindestens einem der Ansprüche 1 bis 4, **dadurch gekennzeichnet, daß** das Funktionsspiel zwischen dem Gleitkörper (4) und dem rohrförmigen Hohlkörper (3) kleiner als 0,05 mm ist.

6. Verfahren zum Herstellen einer Sonnenblende nach den Ansprüchen 1 bis 5, **gekennzeichnet durch** die Schritte:
- Spritzgießen des Gleitkörpers (4) mit Übermaß gegenüber dem Hohlkörper (3),
- Bestücken des Gleitkörpers (4) mit komplettiertem Metallkäfig (14, Bremsbacken (13) und Druckfeder (12),
- Einpressen des bestückten Gleitkörpers (4) in den Hohlkörper (3),
- Erwärmen dieser Einheit auf etwa 90°C über ca. zwei Stunden,
- Abkühlen dieser Einheit auf Raumtemperatur.

## Claims

1. Sun visor for vehicles having a sun visor body (1) which is arranged in a manner such that it can be pivoted around a spindle (5) and can be displaced longitudinally on this spindle (5), the spindle (5) being held moveably, but secured against axial displacement, by a sliding body (4) which is designed as an injection-moulded plastic part and, for its part, is mounted in a rotationally fixed manner, but such that it can be displaced axially, in a tubular hollow body (3) embedded in the region of one longitudinal edge of the sun visor body (1), and the sliding body (4) being equipped with an inner press-on element acting radially against the spindle (5), and having outer press-on elements (15) which are distributed over the circumference and bring about the support of the sliding body (4) in the hollow body (3), and the sliding body (4) having, between a front bearing eyelet (8) and a rear bearing eyelet (9) for the spindle (5), an elongate cavity (10) which is accessible from the outside and in which an elongate metal cage (14) is inserted, the metal cage being intended for holding the spindle (5) and bearing the press-on element acting against the spindle (5), with spring means being arranged between the bottom of the metal cage (14) and the press-on element in order to press the press-on element against the spindle (5) and therefore to press the spindle (5) against the top wall of the metal cage (14), which wall is rounded corresponding to the radius of the spindle (5), **characterized in that** the sliding body (4) is formed from a modified polyoxymethylene, POM, enriched with molybdenum, and has a recess (11) which is open on the bottom side and into which a compression spring (12) and a brake block (13), which is acted upon by the latter and is supported on the bottom wall (17) of the tubular hollow body (3), are inserted.

2. Sun visor according to Claim 1, **characterized in that** molybdenum POM C 9021 M is used.

3. Sun visor according to Claim 1 or 2, **characterized in that** the brake block (13) has an E-shaped design with a central leg over which the compression spring (12) engages.

4. Sun visor according to at least one of Claims 1 to 3, **characterized in that** the brake block (13) is designed as an injection-moulded plastic part and consists of POM 9021 K.

5. Sun visor according to at least one of Claims 1 to 4, **characterized in that** the functional clearance between the sliding body (4) and the tubular hollow body (3) is smaller than 0.05 mm.

6. Method for producing a sun visor according to Claims 1 to 5, **characterized by** the following steps:
- injection moulding the sliding body (4) in a larger size than the hollow body (3),
- fitting the sliding body (4) with completed metal cage (14), brake block (13) and compression spring (12),
- pressing the fitted sliding body (4) into the hollow body (3),
- heating this unit at approximately 90°C for approximately two hours,
- cooling this unit to room temperature.

## Revendications

1. Pare-soleil pour véhicules, comprenant un corps de pare-soleil (1), qui est disposé de manière à pouvoir pivoter autour d'un axe (5) et de manière déplaçable en longueur sur cet axe (5), l'axe (5) étant reçu à rotation, mais de manière bloquée contre tout déplacement axial, par un corps coulissant (4) réalisé sous forme de pièce moulée par injection de plastique, qui est lui-même monté de manière fixe en rotation, mais déplaçable axialement dans un corps creux (3) tubulaire intégré dans la région d'une arête longitudinale du corps de pare-soleil (1), et le corps coulissant (4) étant équipé d'un élément de pression interne agissant radialement contre l'axe (5) et présentant des éléments de pression (15) extérieurs répartis sur la périphérie, assurant le support du corps coulissant (4) dans le corps creux (3), et le corps coulissant (4) présentant, entre un oeillet de support avant (8) et arrière (9) pour l'axe (5) un espace creux (10) longitudinal, accessible depuis l'extérieur, dans lequel est inséré une cage métallique (14) prévue pour recevoir l'axe (5), laquelle porte l'élément de pression agissant contre l'axe (5), des moyens à ressort étant prévus entre le fond de la cage métallique (14) et l'élément de pression afin de presser l'élément de pression contre l'axe (5) et donc l'axe (5) contre la paroi de tête de la cage métallique (14) arrondie de manière correspondant au rayon de l'axe (5), **caractérisé en ce que** le corps coulissant (4) est formé d'un polyoxyméthylène, POM, modifié, enrichi en molybdène, et présente, du côté du fond, un évidement (11) dans lequel sont insérés un ressort de compression (12) et une mâchoire de frein (13) sollicitée par celui-ci, s'appuyant sur la paroi de base (17) du corps creux tubulaire (3).

2. Pare-soleil selon la revendication 1, **caractérisé en ce que** l'on utilise du POM C 9021 M au molybdène.

3. Pare-soleil selon la revendication 1 ou 2, **caractérisé en ce que** la mâchoire de frein (13) est réalisée en forme de E avec une branche centrale avec laquelle vient en prise le ressort de compression (12).

4. Pare-soleil selon au moins l'une des revendications 1 à 3, **caractérisé en ce que** la mâchoire de frein (13) est réalisée sous la forme d'une pièce moulée par injection de plastique et se compose de POM 9021 K.

5. Pare-soleil selon au moins l'une des revendications 1 à 4, **caractérisé en ce que** le jeu fonctionnel entre le corps coulissant (4) et le corps creux tubulaire (3) est inférieur à 0,05 mm.

6. Procédé de fabrication d'un pare-soleil selon les revendications 1 à 5, **caractérisé par** les étapes consistant à :
- mouler par injection le corps coulissant (4) avec un surdimensionnement par rapport au corps creux (3),
- équiper le corps coulissant (4) d'une cage métallique complète (14), d'une mâchoire de frein (13) et d'un ressort de compression (12),
- presser le corps coulissant équipé (4) dans le corps creux (3),
- chauffer cette unité à environ 90°C pendant environ deux heures,
- refroidir cette unité à la température ambiante.
